# EUROPEAN PATENT SPECIFICATION

(11) **EP 1 251 611 B1**
(45) Date of publication and mention of the grant of the patent: **02.07.2014**
(21) Application number: 01202797.5
(22) Date of filing: 20.07.2001
(51) Int. Cl.: H02B 1/015, H02B 1/01

(54) **A structure for electrical distribution boards and the like**
Elektrische Schaltfeldsverteilungsstruktur
Structure de panneau de distribution électrique

(30) Priority: 18.04.2001 IT RM010209
(43) Date of publication of application: 23.10.2002
(73) Proprietor: BTICINO S.P.A., Viale Borri, 231 21100 Varese (IT)
(72) Inventor: Fabrizi, Fabrizio, 24122 Bergamo (IT)
(74) Representative: Carangelo, Pierluigi

(56) References cited:
- EP-A- 0 773 615
- EP-A- 1 085 627
- FR-A- 2 674 581

## Description

The present invention relates to structures for electrical distribution boards and the like, of the type comprising a support framework for panels, doors and the like, in which the framework comprises profiled sections joined together at right angles by releasable fixing means.

Document EP 0 773 615 discloses a device according to the preamble of claim 1.

The invention is for implementation particularly in the manufacture of small electrical distribution boards for wall mounting.

An electrical distribution board of this type comprises a rear panel, two rear profiled sections fixed to opposite sides of the rear panel, four corner profiled sections fixed at right angles to respective ends of the two rear sections, four side walls fixed to the profiled sections, a front frame fixed to the free ends of the four corner sections, and a door or other removable closure panel, fixed to the front frame.

A common feature of electrical distribution boards of this type is the use of screws or bolts for fixing the corner sections to the rear sections.

Although, when the screws are well tightened, this fixing system is effective with regard to the strength of the final structure, it has some disadvantages. The assembly operations are in fact quite lengthy and complex; in particular, the fitting in position and tightening of the screws are often not easy.

The main aim of the present invention is to provide a structure of the type defined in general at the beginning which can be assembled by a few quick operations.

This aim is achieved owing to the fact that at least a first section of the profiled sections of the structure has two longitudinal surfaces joined together by a longitudinal connecting surface so as to form a step, that the framework comprises coupling means which are associated with at least a second section of the profiled sections and which have stepped surfaces that can be juxtaposed with the stepped surfaces of the first section, and that the fixing means comprise means for restrained engagement between the coupling means and the first section.

The invention will be understood better from the following detailed description of two non-limiting embodiments thereof, given with reference to the appended drawings, in which:
Figure 1 is a perspective view of an electrical distribution board according to a first embodiment of the invention, with parts separated.
Figure 2 is a perspective view of a detail of the electrical distribution board shown in Figure 1, on an enlarged scale, and
Figure 3 is a perspective view of a detail according to a second embodiment of the invention, of an electrical distribution board similar to that of Figure 1.

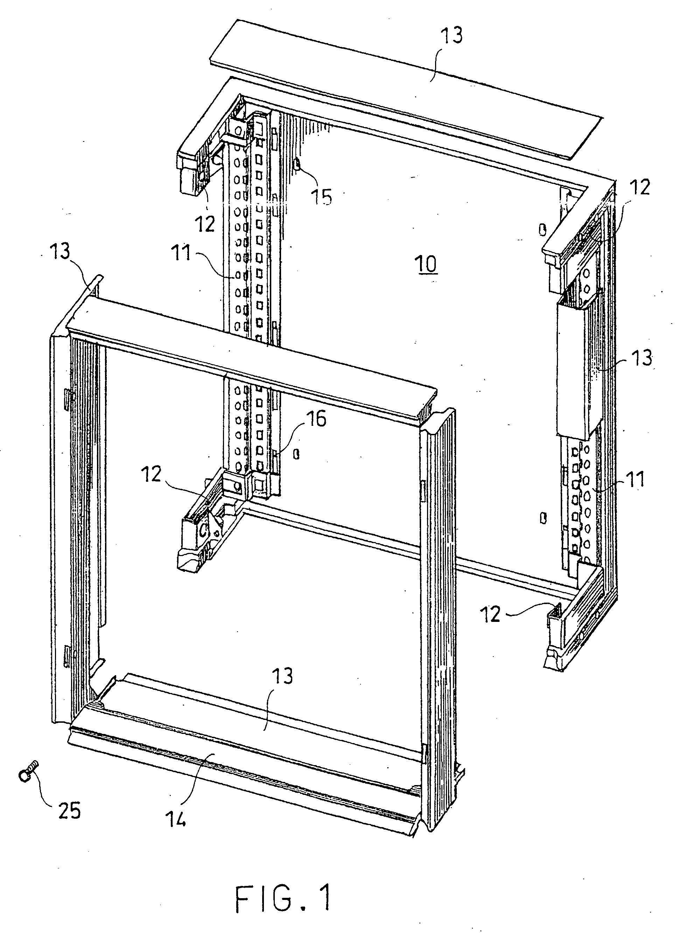

As can be seen in Figure 1, the electrical distribution board according to the invention comprises a rear panel 10, two metal profiled sections 11 fitted along two opposite sides of the rear panel 10, four metal profiled sections 12 which define the corners of the electrical distribution board, four side closure panels 13, and a front frame 14.

The rear panel 10 is made of sheet-metal or of plastics and has four holes 15 for the mounting of the distribution board on a wall by means of screws, hooks, or similar fixing means (not shown).

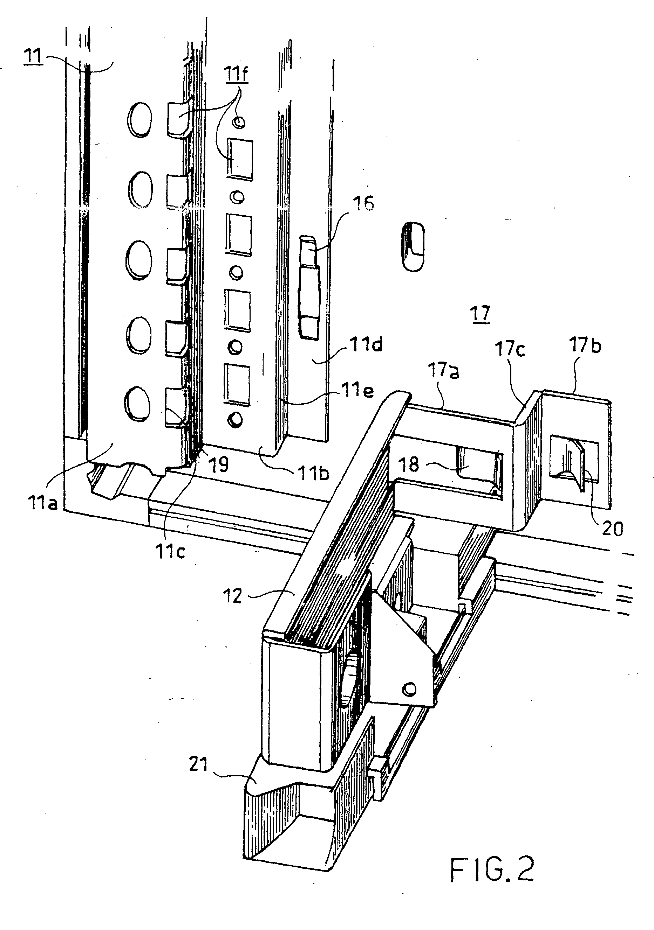

The two rear sections 11 are formed from sheet-metal bent so as to define two parallel longitudinal surfaces 11a and 11b (Figure 2) which are connected to one another by a transverse surface 11c (at right angles in this embodiment) so as to form a step. A third surface 11d parallel to the surfaces 11a and 11b is joined to the intermediate surface 11b by another transverse surface 11e at right angles so as to form a second step. In this embodiment, the two rear sections 11 are fixed to the rear panel 10 by metal clips 16 each having two ends which extend through two slits in the rear panel 10 and through a corresponding slot of the third surface 11d of the respective rear sections 11 and are bent onto two opposite edges of the slots. Moreover, the rear sections 11 have series of longitudinally-aligned holes 11f which serve for the mounting of transverse elements, shelves, or the like.

Each of the four corner sections 12 is shaped at one end so as to have a sheet-metal coupling element 17 which has stepped surfaces 17a, 17b, 17c that can be juxtaposed with the two parallel stepped surfaces 11a and 11b and with the transverse surface 11c, respectively, of a corner section 11.

The coupling element 17 has a resilient tab 18 which extends transversely from the connecting surface 17c in a plane parallel to the surface 17a. The rear section 11 has a slot 19 which, in this embodiment, is one of the holes of the series of longitudinally-aligned holes 11f, through which the tab 18 can extend.

During assembly, the corner section 12 is placed beside the rear section 11 so that the tab 18 enters the slot 19 and the parallel surfaces 17a and 17b of the corner section 12 are slid on the corresponding parallel surfaces 11a and 11b of the rear section 11 until the connecting surfaces 17c and 11c are brought into abutment with one another.

The portion adjacent the slot 19 may be shaped so as to form a seat into which the tab 18, also suitably shaped, can snap.

A stop element may be provided between two of the juxtaposable surfaces of the two sections, to lock the corner section 12 in position. In the embodiment shown, the stop element is constituted by a tooth 20 which is arranged so as to snap into a corresponding hole in the surface 11b of the rear section 11 when the connecting surface 17c of the coupling element 17 is in abutment with the connecting surface 11c of the rear section 11. As can be seen in Figure 2, the tooth 20 is part of a metal strip which is bent so as to enable the stop element to be released by hand or with a suitable tool for easy separation of the coupled sections. In this embodiment, the corner sections 12 and the coupling element 17 are formed together by blanking from a metal sheet and are then bent as required to produce the desired shape including the tab 18 and the tooth 20. A plastics finishing element 21 is then coupled with each of the corner sections 12 by being fitted in suitable recesses.

Each of the panels 13 is slid in between two corner sections 12. The front frame 14 is fixed to the four corner sections 12 by means of 4 screws 25 and locks the panels 13 in position.

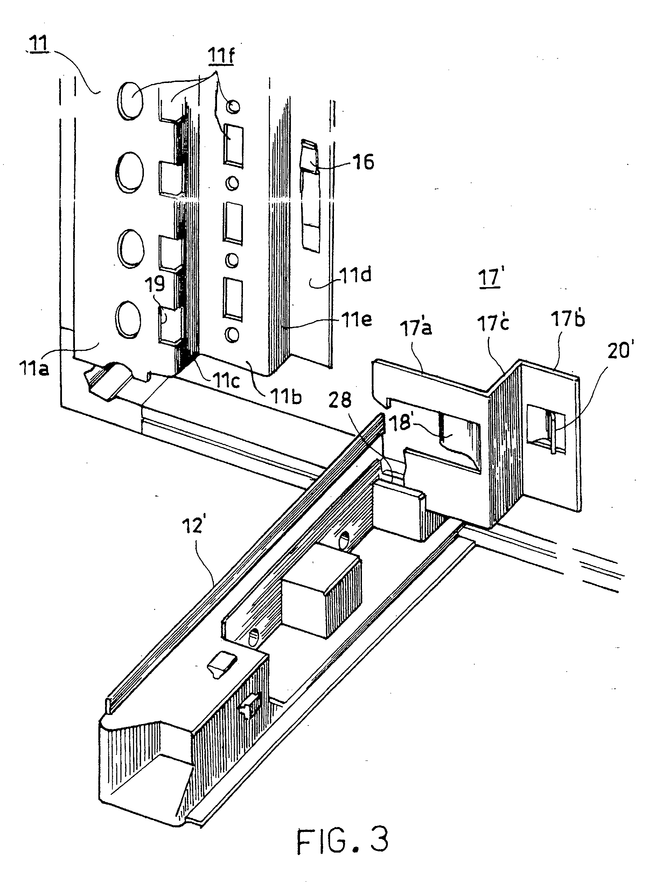

In the embodiment of Figure 3, in which elements identical to those of Figure 2 are indicated by the same reference numerals, the corner sections, of which only one is shown, indicated 12', are fixed to the rear sections 11 by coupling elements 17' which are shaped substantially as the elements 17 of Figure 2 but are separate elements from the corner sections 12'. In this embodiment, the corner sections 12' are made of moulded plastics and each has a transverse recess 28 in which an edge of a coupling element 17' can be fitted. When the coupling element 17' with the section 12' associated therewith is mounted on the rear section 11, that is, when the tab 18' and the tooth 20' are fitted in the corresponding holes in the rear section 11, a firm restrained coupling is achieved between the two sections 11 and 12'.

Although only two embodiments of the invention have been described and illustrated, clearly, many variations and modifications are possible within the scope of the same inventive concept. For example, both of the sections which together constitute the distribution-board framework and the coupling elements could be made of plastics or solely the coupling elements could be of metal and all of the sections could be of plastics. Moreover, instead of the tabs 18 and the teeth 20, plug elements, pins or other engagement and stop means could be used.

## Claims

1. A structure for electrical distribution boards and the like, of the type comprising a support framework for panels, doors and the like, in which the framework comprises profiled sections joined together at right angles by releasable fixing means,
wherein:
at least a first section (11) of the profiled sections has two longitudinal surfaces (11a, 11b) joined together by a longitudinal connecting surface (11c) so as to form a step,
the framework comprises coupling means (17) which are associated with at least a second section (12) of the profiled sections, and which have stepped surfaces (17a, 17b, 17c) that can be juxtaposed with the stepped surfaces (11a, 11b, 11c) of the first section (11), and
the fixing means comprise means for restrained engagement (18, 19) between the coupling means (17) and the first section (11),
**characterized in that** the restrained engagement means (18, 19) comprise a tab (18) integral with the coupling means (17) and a seat (19) for the tab (18), in the first section (11).

2. A structure according to Claim 1 in which, when the engagement means (18, 19) are in the position of use, the tab (18) extends transversely relative to the longitudinal connecting surface of the first section (11) and through a slot (19) provided in this surface.

3. A structure according to Claim 2 in which the tab (18) is resilient and can snap into its seat (19).

4. A structure according to any one of the preceding claims in which the fixing means comprise stop means (20) between two (11b, 17b) of the juxtaposable surfaces of the first section (11) and of the coupling means (17).

5. A structure according to any one of the preceding claims in which the coupling means (17) are formed at one end of the second section (12) and integrally therewith.

6. A structure according to Claim 5 in which the first profiled section (11) and the second profiled section (12) are made of metal.

7. A structure according to any one of Claims 1 to 4 in which the coupling means (17') and the second section (12') associated therewith are engaged and restrained relative to one another when the engagement means (18', 19') are in the position of use.

8. A structure according to Claim 7 in which the first profiled section (11) and the coupling means (17')are made of metal and the second profiled section (12')is made of plastics.

## Patentansprüche

1. Eine Struktur für Elektroverteilertafeln und dergleichen, von dem Typ, der einen Trägerrahmen für Konsolen, Türen und dergleichen aufweist, wobei der Rahmen Profilabschnitte aufweist, die durch lösbare Befestigungseinrichtungen im rechten Winkel miteinander verbunden sind,
wobei:
zumindest ein erster Abschnitt (11) der Profilabschnitte zwei Längsoberflächen (11a, 11 b) aufweist, die durch eine Längsverbindungsoberfläche (11 c) miteinander verbunden sind, um eine Stufe zu bilden,
der Rahmen Kopplungseinrichtungen (17) aufweist, die zumindest einem zweiten Abschnitt (12) der Profilabschnitte zugeordnet sind und die abgestufte Oberflächen (17a, 17b, 17c) aufweisen, die neben die abgestuften Oberflächen (11a, 11 b, 11 c) des ersten Abschnitts (11) platziert werden können, und die Befestigungseinrichtungen Einrichtungen für eine Zurückhalte-Ineingriffnahme (18, 19) zwischen der Kopplungseinrichtung (17) und dem ersten Abschnitt (11) aufweisen,
**dadurch gekennzeichnet, dass** die Zurückhalte-Ineingriffnahme-Einrichtungen (18, 19) in dem ersten Abschnitt (11) einen Vorsprung (18), der mit der Kopplungseinrichtung (17) einstückig gebildet ist, und einen Sitz (19) für den Vorsprung (18) aufweisen.

2. Eine Struktur gemäß Anspruch 1, bei der sich der Vorsprung (18) dann, wenn sich die Ineingriffnahmeeinrichtungen (18, 19) in der Gebrauchsposition befinden, relativ zu der Längsverbindungsoberfläche des ersten Abschnitts (11) quer und durch einen in dieser Oberfläche vorgesehenen Schlitz (19) hindurch erstreckt.

3. Eine Struktur gemäß Anspruch 2, bei der der Vorsprung (18) elastisch ist und in seinen Sitz (19) einschnappen kann.

4. Eine Struktur gemäß einem der vorhergehenden Ansprüche, bei der die Befestigungseinrichtungen eine Anschlageinrichtung (20) zwischen zwei (11b, 17b) der nebeneinander platzierbaren Oberflächen des ersten Abschnitts (11) und der Kopplungseinrichtung (17) aufweisen.

5. Eine Struktur gemäß einem der vorhergehenden Ansprüche, bei der die Kopplungseinrichtung (17) an einem Ende des zweiten Abschnitts (12) gebildet und mit demselben einstückig ist.

6. Eine Struktur gemäß Anspruch 5, bei der der erste Profilabschnitt (11) und der zweite Profilabschnitt (12) aus Metall hergestellt sind.

7. Eine Struktur gemäß einem der Ansprüche 1 bis 4, bei der die Kopplungseinrichtung (17') und der derselben zugeordnete zweite Abschnitt (12') relativ zueinander in Eingriff genommen und zurückgehalten werden, wenn sich die Ineingriffnahmeeinrichtungen (18', 19') in der Gebrauchsposition befinden.

8. Eine Struktur gemäß Anspruch 7, bei der der erste Profilabschnitt (11) und die Kopplungseinrichtung (17') aus Metall hergestellt sind und der zweite Profilabschnitt (12') aus Kunststoff hergestellt ist.

## Revendications

1. Structure pour tableaux de distribution d'électricité et objets similaires, du type comprenant un cadre de support pour des panneaux, portes et éléments similaires, dans lesquels le cadre comprend des sections profilées liées entre elles à angle droit par un moyen de fixation démontable, dans laquelle :
au moins une première section (11) des sections profilées a deux surfaces longitudinales (11a, 11b) liées entre elles par une surface de connexion longitudinale (11c) afin de former un décrochement,
le cadre comprend des moyens d'accouplement (17) qui sont associés à au moins une deuxième section (12) des sections profilées, et qui comportent des surfaces étagées (17a, 17b, 17c) qui peuvent être juxtaposées avec les surfaces étagées (11a, 11b, 11c) de la première section (11), et les moyens de fixation comprennent des moyens permettant l'engagement retenu (18, 19) entre les moyens d'accouplement (17) et la première section (11),
**caractérisée en ce que** les moyens d'engagement retenu (18, 19) comprennent une patte (18) intégrée aux moyens d'accouplement (17) et un siège (19) pour la patte (18), dans la première section (11).

2. Structure selon la revendication 1, dans laquelle, quand les moyens d'engagement (18, 19) sont dans la position d'utilisation, la patte (18) s'étend transversalement par rapport à la surface de connexion longitudinale de la première section (11) et dans une fente (19) prévue dans cette surface.

3. Structure selon la revendication 2, dans laquelle la patte (18) est résiliente et peut s'engager par pression dans son siège (19).

4. Structure selon l'une quelconque des revendications précédentes, dans laquelle les moyens de fixation comprennent un moyen d'arrêt (20) entre deux (11b, 17b) des surfaces juxtaposables de la première section (11) et des moyens d'accouplement (17).

5. Structure selon l'une quelconque des revendications précédentes, dans laquelle les moyens d'accouplement (17) sont formés à une extrémité de la deuxième section (12) et d'un seul tenant avec celle-ci.

6. Structure selon la revendication 5, dans laquelle la première section profilée (11) et la deuxième section profilée (12) sont en métal.

7. Structure selon l'une quelconque des revendications 1 à 4, dans laquelle les moyens d'accouplement (17') et la deuxième section (12') associée à ceux-ci sont en prise et retenus l'un par rapport à l'autre quand les moyens d'engagement (18', 19') sont dans la position d'utilisation.

8. Structure selon la revendication 7, dans laquelle la première section profilée (11) et les moyens d'accouplement (17') sont en métal et la deuxième section profilée (12') est en plastique.
